# EUROPÄISCHE PATENTANMELDUNG

(11) **EP 1 595 885 A2**
(43) Veröffentlichungstag der Anmeldung: **16.11.2005**
(21) Anmeldenummer: 05009751.8
(22) Anmeldetag: 04.05.2005
(51) Int. Cl.: C07F 9/50, C07C 35/06, C07F 9/46, C07F 9/53, B01J 31/24, C07B 53/00, C07C 45/50, C07F 15/00

(54) **Chirale Diphosphorverbindungen und deren Übergangsmetallkomplexe**

(30) Priorität: 10.05.2004 DE 102004022900
(71) Anmelder: LANXESS Deutschland GmbH, 51369 Leverkusen (DE)
(72) Erfinder: Knochel, Paul, Prof. Dr., 82131 Gauting (DE); Bunlaksananusorn, Tanasari, Dr., 51373 Leverkusen (DE); Gavryushin, Andrei, 82110 Germering (DE)

(57) **Zusammenfassung**

Die vorliegende Erfindung betrifft chirale Diphosphorverbindungen und deren Übergangsmetallkomplexe, ein Verfahren zur Herstellung chiraler Diphosphorverbindungen bzw. deren Oxide und Übergangsmetallkomplexe enthaltend die chiralen Diphosphorverbindungen. In einem weiteren Aspekt betrifft die Erfindung die Verwendung der chiralen Diphosphorverbindungen bzw. deren Übergangsmetallkomplexe in asymmetrischen Synthesen.

## Beschreibung

Die vorliegende Erfindung betrifft chirale Diphosphorverbindungen und deren Übergangsmetallkomplexe, sowie ein Verfahren zur Herstellung chiraler Diphosphorverbindungen bzw. deren Oxide. In einem weiteren Aspekt betrifft die Erfindung die Verwendung der chiralen Diphosphorverbindungen bzw. deren Übergangsmetallkomplexe in asymmetrischen Synthesen.

Enantiomerenangereicherte chirale Verbindungen sind wertvolle Ausgangssubstanzen zur Herstellung von Agrochemikalien und Pharmazeutika. Dabei hat die asymmetrische Katalyse für die Synthese solcher enantiomerenangereicherten chiralen Verbindungen eine große technische Bedeutung gewonnen.

Die Vielzahl der Publikationen auf dem Gebiet der asymmetrischen Synthese zeigt deutlich, dass Übergangsmetallkomplexe von Diphosphorverbindungen als Katalysatoren in asymmetrisch geführten Reaktionen besonders geeignet sind (H.C. Brown, K. Murray, J. Am. Chem. Soc., 1959, 81, 4108). Insbesondere haben Übergangsmetallkomplexe von Diphosphorverbindungen als Katalysatoren in asymmetrischen Hydrierungen von C=O, C=N und C=C-Bindungen, Hydrocyanierungen und Hydroformylierungen Eingang in technische Prozesse gefunden.

Beispielsweise ist aus Achiwa et al., Synlett, 1991, 49 bekannt, dass mit (*1R*, *2R*)-1-Diphenylphosphino-2-diphenylphosphinomethyl-cyclopentan als Ligand in der Rhodium-katalysierten Hydrierung befriedigende Enantioselektivitäten erreicht werden können.

Der prinzipielle Nachteil ist allerdings, dass über das beschriebene Herstellungsverfahren eine sterische und elektronische Variation des Ligandensystems, die für eine gezielte Optimierung und Adaptierung des Liganden und damit des Katalysators für ein vorgegebenes Substrat notwendig ist, nicht möglich ist. Dieser Nachteil erschwert bislang eine industrielle Nutzung.

Es bestand daher das Bedürfnis, ein in seinen sterischen und elektronischen Eigenschaften leicht variierbares Ligandensystem zu entwickeln, dessen Übergangsmetallkomplexe als Katalysatoren in der asymmetrischen Synthese wie insbesondere asymmetrischen Hydrierungen neben hoher Enantioselektivität auch hohe Umsatzraten ermöglichen. Weiterhin bestand das Bedürfnis für ein solches Ligandensystem und die entsprechenden Vorstufen einen bequemen Zugang zu entwickeln.

Es wurden nun Verbindungen der Formel (I) gefunden, 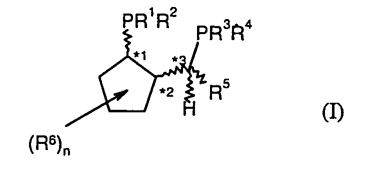 in der
- *1, *2 und *3 jeweils unabhängig voneinander ein stereogenes Kohlenstoffatom markieren, das in R- oder S- Konfiguration vorliegt,
- R¹, R², R³ und R⁴ jeweils unabhängig voneinander stehen können für: Alkyl, Arylalkyl oder Aryl oder einen heterocyclischen Rest mit insgesamt 4 bis 16 Kohlenstoffatomen oder R¹ und R² und/oder R³ und R⁴ jeweils zusammen für Alkylen stehen,
- R⁵ stehen kann für: Alkyl, Arylalkyl oder Aryl und
- R⁶ stehen kann für: Alkyl, Alkoxy, Arylalkyl oder Aryl und
- n stehen kann für: 0, 1 oder 2.

Der Rahmen der Erfindung umfasst alle oben stehenden und im Folgenden aufgeführten, allgemeinen oder in Vorzugsbereichen genannten Restedefinitionen, Parameter und Erläuterungen in beliebiger Kombination untereinander, also auch zwischen den jeweiligen Bereichen und Vorzugsbereichen.

Aryl steht im Rahmen der Erfindung sofern nicht gesondert vermerkt bevorzugt für carbocyclische aromatische Reste mit 6 bis 24 Gerüstkohlenstoffatomen oder heteroaromatische Reste mit 5 bis 24 Gerüstkohlenstoffatomen, in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können. Weiterhin können die carbocyclischen aromatischen Reste oder heteroaromatische Reste mit bis zu fünf gleichen oder verschiedenen Substituenten pro Cyclus substituiert sein, ausgewählt aus der Gruppe Hydroxy, Fluor, Nitro, Cyano, freies oder geschütztes Formyl, C₁-C₁₂-Alkyl, C₅-C₁₄-Aryl, C₆-C₁₅-Arylalkyl, -PO-[(C₁-C₈)-Alkyl]₂, -PO-[(C₅-C₁₄)-Aryl]₂, -PO-[(C₁-C₈)-Alkyl)(C₅-C₁₄)-Aryl)], Tri(C₁-C₈-alkyl)siloxyl oder Resten der Formeln (IIa) bis (IIf). Gleiches gilt für den Arylteil eines Arylalkyl-Restes.

Beispielsweise steht Aryl besonders bevorzugt für Phenyl, Naphthyl oder Anthracenyl, das gegebenenfalls einfach, zweifach oder dreifach durch Reste substituiert ist, die jeweils unabhängig voneinander ausgewählt sind aus der Gruppe C₁-C₆-Alkyl, C₅-C₁₄-Aryl, C₁-C₆-Alkoxy, C₁-C₆-Alkoxycarbonyl, Halogen, Hydroxy, Nitro oder Cyano.

**Alkyl** bzw. **Alkylen** bzw. **Alkoxy** steht im Rahmen der Erfindung sofern nicht gesondert vermerkt bevorzugt jeweils unabhängig für einen geradkettigen, cyclischen, verzweigten oder unverzweigten Alkyl- bzw. Alkylen- bzw. Alkoxy-Rest, der gegebenenfalls durch C₁-C₄-Alkoxy-Reste weiter substituiert sein kann. Gleiches gilt für den Alkylenteil eines Arylalkyl-Restes.

Beispielsweise steht Alkyl besonders bevorzugt für Methyl, Ethyl, n-Propyl, Isopropyl, n-Butyl, tert.-Butyl, n-Pentyl, Cyclohexyl und n-Hexyl, n-Heptyl, n-Octyl, iso-Octyl, n-Decyl und n-Dodecyl.

Beispielsweise steht Alkylen bevorzugt 1,3-Propylen, 1,4-Butylen, 1,5-Pentylen, 1,6-Hexylen, S,S-oder R,R-2,5-Hexylen, 1,4-Cyclohexylen, 1,2-Cyclohexylen und 1,8-Octylen.

Beispielsweise steht Alkoxy bevorzugt für Methoxy, Ethoxy, Isopropoxy, n-Propoxy, n-Butoxy, tert.-Butoxy und Cyclohexyloxy.

**Arylalkyl** steht im Rahmen der Erfindung sofern nicht gesondert vermerkt bevorzugt jeweils unabhängig für einen geradkettigen, cyclischen, verzweigten oder unverzweigten Alkylrest, der einfach oder mehrfach, besonders bevorzugt einfach durch Arylreste gemäß vorstehender Definition substituiert ist.

**Halogenalkyl** bzw**. Halogenalkylen** steht im Rahmen der Erfindung sofern nicht gesondert vermerkt bevorzugt jeweils unabhängig für einen geradkettigen, cyclischen, verzweigten oder unverzweigten Alkylrest bzw. Alkylenrest, der mit einem, mehreren oder vollständig mit Halogenatomen unabhängig voneinander ausgewählt aus der Gruppe Fluor, Chlor, Brom und Iod substituiert sein kann.

Beispielsweise steht Halogenalkyl besonders bevorzugt für Trifluormethyl, Trichlormethyl, 2,2,2-Trifluorethyl, Pentafluorethyl und Nonafluorbutyl, C₁-C₈-Fluoralkyl für Trifluormethyl, 2,2,2-Trifluorethyl, Pentafluorethyl und Nonafluorbutyl.

Im Folgenden werden bevorzugte Verbindungen der Formel (I) definiert.
- *1, *2 sind bevorzugt so gewählt, dass die entsprechenden Phosphansubstituenten bezogen auf die Ebene des zentralen fünfgliedrigen Ringes eine cis-Position einnehmen. Die Verbindungen der Formel (I) sind weiterhin bevorzugt stereoisomerenangereichert.
- R¹ und R² bzw. R³ und R⁴ stehen bevorzugt jeweils paarweise identisch für: Alkyl oder Aryl oder einen heterocyclischen Rest mit insgesamt 4 bis 9 Kohlenstoffatomen oder jeweils zusammen für Alkylen.
   Besonders bevorzugt stehen R¹ und R² bzw. R³ und R⁴ jeweils paarweise identisch für: C₃-C₆-Alkyl, gegebenenfalls einfach, zweifach oder dreifach durch C₁-C₆-Alkyl, C₁-C₆-Halogenalkyl, C₁-C₆-Alkoxy, Chlor oder Fluor substituiertes Phenyl oder jeweils zusammen für C₄-C₆-Alkylen. Ganz besonders bevorzugt sind alle vier Reste R¹, R², R³ und R⁴ identisch.
- R⁵ steht bevorzugt für: C₁-C₆-Alkyl
- R⁵ stehen kann für: Alkyl, Arylalkyl oder Aryl und
- n steht bevorzugt für 0

Ganz besonders bevorzugte Verbindungen der Formel (I) sind:
(*1R*, *2R*)-1-Diphenylphosphino-2-(1*S*-diphenylphosphino-ethyl)-cyclopentan, (*1R, 2R*)-1-Diphenylphosphino-2-(1S-diphenylphosphino-2-methylpropyl)-cyclo-pentan und (*1R*, *2R*)-1-Diphenylphosphino-2-(S-diphenylphosphino-cyclohexyl-methyl)-cyclopentan.

Von der Erfindung sind weiterhin auch Komplexe der Verbindungen der Formel (I) mit Boranen wie z.B. Boran oder Borabicyclononan (BBN-9) umfasst.

Der Begriff stereoisomerenangereichert bzw. enantiomerenangereichert umfasst im Sinne der Erfindung stereoisomerenreine bzw. enantiomerenreine Verbindungen und Mischungen von stereoisomeren bzw. enantiomeren Verbindungen in denen ein Stereoisomeres bzw. Enantiomeres in einem größeren relativen Anteil als das oder die anderen Stereoisomere bzw. Enantiomere, bevorzugt in einem relativen Anteil von über 50 % bis 100 Mol-%, besonders bevorzugt 90 bis 100 Mol-% und ganz besonders bevorzugt 98 bis 100 Mol-%, vorliegt.

Die Verbindungen der Formel (I) lassen sich über ein ebenfalls erfindungsgemäßes Verfahren herstellen.

Dieses Verfahren ist dadurch gekennzeichnet, dass
- in einem Schritt A) Verbindungen der Formel (II) 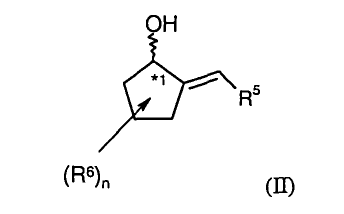 in der *1 und R⁵ die für Formel I genannten Bedeutungen und Vorzugsbereiche besitzen und in der R⁵ weiterhin für Wasserstoff stehen kann
   mit Verbindungen der Formel (III)

   Hal-PR³R⁴ (III)

   zu Verbindungen der Formel (IV) umgesetzt werden 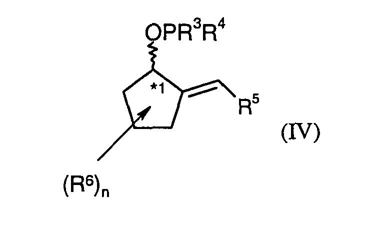 und
- in einem Schritt B) die Verbindungen der Formel (IV) gegebenenfalls in einem organischen Lösungsmittel durch Erhitzen auf mindestens 60°C in Verbindungen der Formel (V) überführt werden 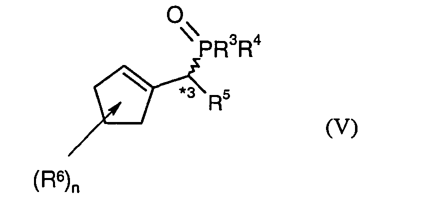
- und in einem Schritt C) die Verbindungen der Formel (V) durch Umsetzung mit einem Boran und anschließende Oxidation in Verbindungen der Formel (VI) überführt werden 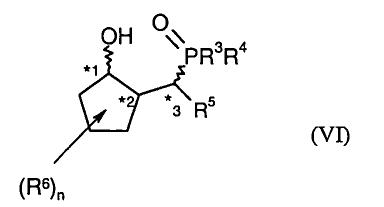
- und in einem Schritt D) die Verbindungen der Formel (VI) durch Reduktion in Verbindungen der Formel (VII) überführt werden 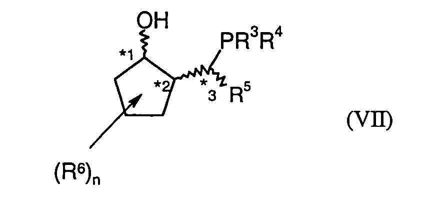
- und in einem Schritt E) die Verbindungen der Formel (VII) durch Umsetzung mit Verbindungen der Formel (VIII)

   Hal-O₂SR⁷ (VIII)

   in Verbindungen der Formel (IX) überführt werden 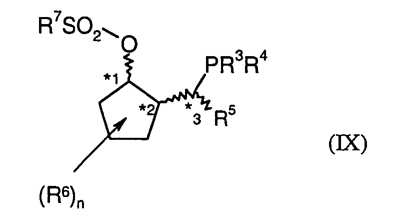
- und in einem Schritt F) die Verbindungen der Formel (IX) durch Umsetzung mit Verbindungen der Formel (X)

   HPR¹R² (X)
in die Verbindungen der Formel (I) überführt werden.

In den Formeln (II), (IV), (V), (VI), (VII), (IX) und (X) besitzen *1, *2 und *3, R¹, R², R³, R⁴, R⁵ und R⁶ jeweils die gleichen Bedeutungen und Vorzugsbereiche, wie sie unter der Formel (I) bereits beschrieben wurden.

Weiterhin steht R⁷ in den Formeln (VIII) und (IX) für Alkyl, Fluoralkyl, Arylalkyl, oder Aryl, bevorzugt für Alkyl und Fluoralkyl.

In den Formeln (III) und (VIII) steht Hal jeweils für Chlor, Brom oder Iod, bevorzugt für Chlor.

Die Verbindungen der Formeln (II, (IV), (V), (VI, (VII und (IX) sind bislang unbekannt und daher als unverzichtbare Intermediate von der Erfindung ebenfalls umfasst. Es gelten dabei die für *1, *2 und *3, R¹, R², R³, R⁴, R⁵, R⁶ und R⁷ oben genannten Bedeutungen und Vorzugsbereiche in gleicher Weise.

Weiterhin sind von der Erfindung auch Komplexe von Verbindungen der Formel (VII) mit Boranen, wie z.B. Boran oder Borabicyclononan (BBN-9) umfasst.

Weiterer Gegenstand der Erfindung sind Verfahren, die die nachstehenden Schritte umfassen, wie sie vorstehend beschrieben wurden:
- F) oder A)
- E) und F) oder A) und B)
- D), E) und F) oder A), B) und C)
- C), D), E) und F) oder A), B) C) und D)
- B), C), D), E) und F) oder A), B), C), D) und E)

Die einzelnen Schritte sind in ihrer chemischen Natur prinzipiell bereits bekannt und können in analoger Weise auf die erfindungsgemäßen Verbindungen angewandt werden.

Bevorzugte Verbindungen der Formel (II) sind:
(*1S*)-2-Ethylidencyclopentanol, (*1S*)-2-(2-methylpropyliden)cyclopentanol und (*1S*)-2-Cyclohexylmethylidencyclopentanol.

Eine bevorzugte Verbindung der Formel (III) ist Chlordiphenylphosphin.

Bevorzugte Verbindungen der Formel (IV) sind:
(*1R*)-Diphenylphosphinoxy-2-Ethylidencyclopentan, (*1R*)-Diphenylphosphinoxy-2-(2-methylpropyliden)cyclopentan und (*1R*)-Diphenylphosphinoxy-2-cyclohexylmethylidencyclopentan.

Bevorzugte Verbindungen der Formel (V) sind:
(1*S*)-Diphenylphosphinoylethylcyclopenten, ((1*S*)-Diphenylphosphinoyl-2-methylpropyl)cyclopenten und ((1*S*)-Diphenylphosphinoyl-1-methyl-cyclohexyl)cyclopenten.

Bevorzugte Verbindungen der Formel (VI) sind:
(*1S, 2R*)-1-Hydroxy-2-(1S-diphenylphosphinoyl-ethyl)-cyclopentan, (*1S, 2R*)-1-Hydroxy-2-(1S-diphenylphosphinoyl-2-methylpropyl)-cyclopentan und (*1S*, *2R*)-1-Hydroxy-2-(S-diphenylphosphinoyl-cyclohexylmethyl)-cyclopentan.

Bevorzugte Verbindungen der Formel (VII) sind:
(*1S*, *2R*)-1-Hydroxy-2-(1S-diphenylphosphino-ethyl)-cyclopentan, (*1S*, *2R*)-1-Hydroxy-2-(1S-diphenylphosphino-2-methylpropyl)-cyclopentan und (*1S, 2R*)-1-Hydroxy-2-(*S*-diphenylphosphino-cyclohexylmethyl)-cyclopentan.

Bevorzugte Verbindungen der Formel (IX) sind:
(*1S*, *2R*)-1-Methansulfonyloxy-2-(1*S*-diphenylphosphino-ethyl)-cyclopentan, (*1S, 2R*)-1-Methansulfonyloxy-2-(1S-diphenylphosphino-2-methylpropyl)-cyclopentan und (*1S*, *2R*)-1-Methansulfonyloxy-2-(S-diphenylphosphino-cyclohexylmethyl)-cyclopentan.

Eine bevorzugte Verbindung der Formel (X) ist Diphenylphosphin.

Auf beschriebene Weise sind die Verbindungen der Formel (I) in hohen Ausbeuten in effizienter Weise zugänglich.

Die Erfindung umfasst weiterhin Übergangsmetallkomplexe, die die erfindungsgemäßen Verbindungen der Formel (I) enthalten.

Übergangsmetallkomplexe sind bevorzugt solche von Ruthenium, Osmium, Cobalt, Rhodium, Iridium, Nickel, Palladium, Platin und Kupfer, bevorzugt solche von Ruthenium, Rhodium, Iridium, Nickel, Palladium und Platin, besonders bevorzugt solche von Ruthenium, Rhodium, Iridium und Palladium.

Die erfindungsgemäßen Übergangsmetallkomplexe eignen sich insbesondere als Katalysatoren. Daher sind von der Erfindung auch Katalysatoren umfasst, die die erfindungsgemäßen Übergangsmetallkomplexe enthalten.

Als Katalysatoren können beispielsweise entweder isolierte Übergangsmetallkomplexe eingesetzt werden oder solche Übergangsmetallkomplexe, die durch Umsetzung von Übergangsmetallverbindungen und Verbindungen der Formel (I) erhältlich sind.

Isolierte Übergangsmetallkomplexe, die die Verbindungen der Formel (I) enthalten, sind vorzugsweise solche, in denen das Verhältnis von Übergangsmetall zu Verbindung der Formel (I) 1:1 beträgt.

Bevorzugt sind dabei die erfindungsgemäßen Verbindungen der Formel (XI)

[(I)L¹₂M][An¹] (XI)

in der (I) für Verbindungen der Formel (I) mit der dort genannten Bedeutung und deren Vorzugsbereichen steht und
- M: für Rhodium oder Iridium und
- L¹ j: eweils für ein C₂-C₁₂-Alken wie beispielsweise Ethylen oder Cycloocten oder ein Nitril wie beispielsweise Acetonitril, Benzonitril oder Benzylnitril steht, oder
- L¹₂: zusammen für ein (C₄-C₁₂)-Dien wie beispielsweise Bicyclo[2.1.1]hepta-2,5-dien (Norbornadien) oder 1,5-Cyclooctadien steht und
- [An¹]: für ein Anion, bevorzugt für Methansulfonat, Trifluormethansulfonat, Tetrafluoroborat, Hexafluorophosphat, Perchlorat, Hexafluoroantimonat, Tetra(bis-3,5-trifluromethylphenyl)-borat oder Tetraphenylborat steht.

Bevorzugte Übergangsmetallkomplexe sind solche, die durch Umsetzung von Übergangsmetallverbindungen und Verbindungen der Formel (I) erhältlich sind.

Geeignete Übergangsmetallverbindungen sind beispielsweise solche der Formel

M(An²)_{q} (XIIa)

in der
- M: für Rhodium, Iridium, Ruthenium, Nickel, Paladium, Platin oder Kupfer und
- An²: für Chlorid, Bromid, Acetat, Nitrat, Methansulfonat, Trifluormethansulfonat oder Acetylacetonat und
- q: für Rhodium, Iridium und Ruthenium für 3, für Nickel, Palladium und Platin für 2 und für Kupfer für 1 steht,
oder Übergangsmetallverbindungen der Formel (XIIb)

M(An³)_{q}L¹₂ (XIIb)

in der
- M: für Ruthenium, Iridium, Ruthenium, Nickel, Palladium, Platin oder Kupfer und
- An³: für Chlorid, Bromid, Acetat, Acetylacetonat, Methansulfonat oder Trifluormethansulfonat, Tetrafluoroborat oder Hexafluorophosphat, Perchlorat, Hexafluoroantimonat, Tetra(bis-3,5-trifluromethylphenyl)-borat oder Tetraphenylborat steht und
- q: für Rhodium und Iridium für 1, für Ruthenium, Nickel, Palladium und Platin für 2 und für Kupfer für 1 steht,
- L¹: jeweils für ein C₂-C₁₂-Alken wie beispielsweise Ethylen oder Cycloocten oder ein Nitril wie beispielsweise Acetonitril, Benzonitril oder Benzylnitril steht, oder
- L¹₂: zusammen für ein (C₄-C₁₂)-Dien wie beispielsweise Bicyclo[2.1.1]hepta-2,5-dien (Norbornadien) oder 1,5-Cyclooctadien steht
oder Übergangsmetallverbindungen der Formel (XIIc)

[ML²An¹₂]₂ (XIIc)

in der
- M: für Ruthenium und
- L²: für Arylreste wie zum Beispiel Cymol, Mesityl, Phenyl oder Cyclooctadien, Norbornadien oder Methylallyl steht
oder Übergangsmetallverbindungen der Formel (XIId)

Met³_{q}[M(An⁴)₄] (XIId)

in der
- M: für Palladium, Nickel, Iridium oder Rhodium und
- An⁴: für Chlorid oder Bromid steht und
- Met: für Lithium, Natrium, Kalium, Ammonium oder organisches Ammonium steht und
- q: für Rhodium und Iridium für 3, für Nickel, Palladium und Platin für 2 steht,
oder Übergangsmetallverbindungen der Formel (XIIe)

[M(L³)₂]An⁵ (XIIe)

in der
- M: für Iridium oder Rhodium und
- L³: für (C₄-C₁₂)-Dien wie beispielsweise Bicyclo[2.1.1]hepta-2,5-dien (Norbornadien) oder 1,5-Cyclooctadien steht und
- An⁵: für ein nicht oder schwach koordinierendes Anion wie zum Beispiel Methansulfonat, Trifluormethansulfonat, Tetrafluoroborat, Hexafluorophosphat, Perchlorat, Hexafluoroantimonat, Tetra(bis-3,5-trifluormethylphenyl)-borat oder Tetraphenylborat steht.

Darüber hinaus sind als Übergangsmetallverbindungen beispielsweise Ni(1,5-Cyclooctadien)₂, Pd₂(dibenzylidenaceton)₃, Pd[PPh₃]₄, Cyclopentadienyl₂Ru, Rh(acac)(CO)₂, Ir(pyridin)₂(1,5-Cyclooctadien), Cu(Phenyl)Br, Cu(Phenyl)Cl, Cu(Phenyl)I, Cu(PPh₃)₂Br, [Cu(CH₃CN)₄]BF₄ und [Cu(CH₃CN)₄]PF₆ oder mehrkernige verbrückte Komplexe wie beispielsweise [Rh(1,5-cyclooctadien)Cl]₂, [Rh(1,5-cyclooctadien)Br]₂, [Rh(Ethen)₂Cl]₂, [Rh(Cycloocten)₂Cl]₂ geeignet.

Bevorzugt werden als Übergangsmetallverbindungen eingesetzt:
[Rh(cod)(acac)] wobei acac für Acetylacetonat steht, [Ir(Ethylen)₂(acac)], [Rh(Ethylen)₂(acac)], [Rh(cod)Cl]₂, [Rh(cod)Br]₂, [Ph(cod)₂]ClO₄, [Rh(cod)₂]BF₄, [Rh(cod)₂]PF₄, [Rh(cod)₂]ClO₆, [Rh(cod)₂]OTf, [Rh(cod)₂]BAr₄ (Ar = 3,5-bistrifluormethylphenyl), [Rh(cod)₂]SbF₆, RuCl₂(cod), [(Cymol)RuCl₂]₂, [(Benzol)RuCl₂]₂, [(Mesityl)RuCl₂]₂, [(Cymol)RuBr₂]₂, [(Cymol)RuI₂]₂, [(Cymol)Ru(BF₄)₂]₂, [(Cymol)Ru(PF₆)₂]₂, [(Cymol)Ru(BAr₄)₂]₂ (Ar = 3,5-bistrifluormethylphenyl), [(Cymol)Ru(SbF₆)₂]₂, [Ir(cod)Cl]₂, [Ir(cod)₂]PF₆, [Ir(cod)₂]ClO₄, [Ir(cod)₂]SbF₆, [Ir(cod)₂]BF₄, [Ir(cod)₂]OTf, [Ir(cod)₂]BAr₄ (Ar = 3,5-bistrifluormethylphenyl), RuCl₃, NiCl₃, RhCl₃, PdCl₂, PdBr₂, Pd(OAc)₂, Pd₂(dibenzylidenaceton)₃, Pd(acetylacetonat)₂, CuOTf, CuI, CuCI, Cu(OTf)₂, CuBr, CuI, CuBr₂, CuCl₂, CuI₂, [Rh(nbd)Cl]₂, [Rh(nbd)Br]₂, [Rh(nbd)₂]ClO₄, [Rh(nbd)₂]BF₄, [Rh(nbd)₂]PF₆, [Rh(nbd)₂]OTf, [Rh(nbd)₂]BAr₄ (Ar = 3,5-bistrifluormethylphenyl), [Rh(nbd)₂]SbF₆, RuCl₂(nbd), [Ir(nbd)₂]PF₆, [Ir(nbd)₂]ClO₄, [Ir(nbd)₂]SbF₆, [Ir(nbd)₂]BF₄, [Ir(nbd)₂]OTf, [Ir(nbd)₂]BAr₄ (Ar = 3,5-bistrifluormethylphenyl), Ir(pyridin)₂(nbd), [Ru(DMSO)₄Cl₂], [Ru(CH₃CN)₄Cl₂], [Ru(PhCN)₄Cl₂], [Ru(cod)Cl₂]ₙ, [Ru(cod)₄(Methallyl)₂], [Ru(acetylacetonat)₃].

Die Menge der eingesetzten Übergangsmetallverbindungen kann beispielsweise 25 bis 200 mol-% bezogen auf die eingesetzte Verbindung der Formel (I) betragen, bevorzugt sind 50 bis 150 mol-%, ganz besonders bevorzugt 75 bis 125 mol-% und noch weiter bevorzugt 100 bis 125 mol-% .

Die Katalysatoren, die die erfindungsgemäßen Übergangsmetallkomplexe enthalten eignen sich insbesondere für den Einsatz in einem Verfahren zur Herstellung von stereoisomerenangereicherten, bevorzugt enantiomerenangereicherten Verbindungen.

Bevorzugt werden die Katalysatoren für asymmetrische 1,4-Additionen, asymmetrische Hydroformylierungen, asymmetrische allylische Substitutionen, asymmetrische Hydrocyanierungen, asymmetrische Heck-Reaktionen, asymmetrische Hydroborierungen und asymmetrische Hydrogenierungen eingesetzt, besonders bevorzugt für asymmetrische Hydrogenierungen, asymmetrische 1,4-Additionen, asymmetrische Hydroborierungen und asymmetrische allylische Substitutionen.

Bevorzugte asymmetrische Hydrogenierungen sind beispielsweise Hydrogenierungen von prochiralen C=C-Bindungen wie zum Beispiel von prochirale Enaminen, Enamiden, Olefinen, Enolethern, C=O-Bindungen wie zum Beispiel von prochirale Ketonen und C=N-Bindungen wie zum Beispiel von prochiralen Iminen. Besonders bevorzugte asymmetrische Hydrogenierungen sind Hydrogenierungen von prochiralen C=C-Bindungen wie zum Beispiel von prochiralen Enaminen und Enamiden, Olefinen.

Von der Erfindung ist daher auch ein Verfahren zur Herstellung von stereoisomerenangereicherten, bevorzugt enantiomerenangereicherten Verbindungen durch katalytische Hydrierung von Olefinen, Enaminen, Enamiden, Iminen oder Ketonen umfasst, das dadurch gekennzeichnet ist, dass als Katalysatoren solche verwendet werden, die Übergangsmetallkomplexe von Verbindungen der Formel (I) mit der dort angegebenen Bedeutung enthalten.

Die Menge der eingesetzten Übergangsmetallverbindung oder des eingesetzten Übergangsmetallkomplexes kann beispielsweise 0.001 bis 5 mol-% bezogen auf das eingesetzte Substrat betragen, bevorzugt sind 0.001 bis 0,5 mol-%, ganz besonders bevorzugt 0.001 bis 0,1 mol-% und noch weiter bevorzugt 0,001 bis 0,008 mol-% .

In einer bevorzugten Ausführungsform können asymmetrische Hydrogenierungen, 1,4-Additionen und Hydroborierungen beispielsweise so durchgeführt werden, dass der Katalysator aus einer Übergangsmetallverbindung und Verbindung der Formel (I) gegebenenfalls in einem geeigneten Lösungsmittel erzeugt wird, das Substrat zugegeben wird und die Reaktionsmischung bei Reaktionstemperatur mit dem Reaktanden versetzt wird (Wasserstoff, Boronsäuren, Boranen etc.)

Als Lösungsmittel für die asymmetrische Katalyse eignen sich beispielsweise chlorierte Alkane wie Methylchlorid, kurzkettige C₁-C₆-Alkohole wie z.B. Methanol, iso-Propanol oder Ethanol, aromatische Kohlenwasserstoffe wie z.B. Toluol oder Benzol, Ketone wie z.B. Aceton oder Carbonsäureester wie z.B. Ethylacetat.

Die asymmetrische Katalyse wird vorteilhaft bei einer Temperatur von -20°C bis 200°C, bevorzugt 0 bis 100°C und besonders bevorzugt bei 20° bis 70°C durchgeführt.

Die erfindungsgemäßen Katalysatoren eignen sich insbesondere in einem Verfahren zur Herstellung von stereoisomerenangereicherten, bevorzugt enantiomerenangereicherten Wirkstoffen in Arzneimitteln und Agrochemikalien, oder Zwischenprodukten dieser beiden Klassen.

Der Vorteil der vorliegenden Erfindung ist, dass die Verbindungen der Formel (I) in effizienter Weise hergestellt werden können und deren elektronische und sterische Eigenschaften ausgehend von einfach verfügbaren Edukten in weitem Masse variabel sind. Weiterhin zeigen die erfindungsgemäßen Liganden und deren Übergangsmetallkomplexe eine gute Performance in asymmetrischen Synthesen.

### Beispiele:

### Allgemeine Arbeitsvorschrift 1 zur Synthese von 2-Alkylidencyclopentanonen

In einen 2 1 Erlenmeyer Kolben wurden 1 l H₂O, 15 g KOH, 100 ml MTBE und 30 ml Cyclopentanon gegeben. In die stark gerührte Mischung wurde bei Raumtemperatur innerhalb von 2 h tropfenweise eine Lösung von 0.3 mol des jeweiligen Aldehyds in 50 ml MTBE gegeben. Das Reaktionsgemisch wurde weitere 30 min gerührt und dann mit konz. HCl neutralisiert. Die organische Phase wurde abgetrennt und das Lösungsmittel im Vakuum entfernt. Der Rückstand wurde fraktionierend im Vakuum mit einer 40 cm Vigreux-Kolonne destilliert. Der typische Ausbeutebereich liegt bei 18 bis 45%.

### Allgemeine Arbeitsvorschrift 2 zur Reduktion von 2-Alkylidencyclopentanonen zu den korrespondieren Alkoholen

In einem 500 ml Rundkolben wurden 36 g CeCl₃-7 H₂O in 210 ml Methanol gelöst. 150 mM des Ketons wurden zugegeben, die Mischung auf 0°C gekühlt und anschließend 4.0 g festes NaBH₄ in kleinen Portionen zugegeben, so dass die Temperatur nicht über 5°C stieg. Das Reaktionsgemisch wurde weitere 15 min gerührt und dann auf 250 g Eis gegeben. Das Reaktionsgemisch wurde unter Rühren auf Raumtemperatur erwärmen gelassen, die obere Phase abgetrennt und die wässrige Phase dreimal mit je 100 ml Diethylether extrahiert. Die vereinigten organischen Phasen wurden mit 50 ml H₂O, und 50 ml gesättigter Kochsalzlösung gewaschen, über Magnesiumsulfat getrocknet und das Lösungsmittel im Vakuum entfernt. Der Rückstand wurde im Vakuum mit einer 40 cm Vigreux-Kolonne fraktionierend destilliert. Typischer Ausbeutebereich: 93 bis 96%.

### Allgemeine Arbeitsvorschrift 3 zur enzymatischen kinetischen Racematspaltung von 2-Alkylidencyclopentanolen

100 mM des jeweiligen Alkohols wurden in 200 ml Hexan gelöst, dann 20 ml Vinylacetat und 0.80 g Amano PS Lipase (*Pseudomonas cepacia,* Aldrich) zugegeben. Das Reaktionsgemisch wurde bei 44 bis 45°C (Innentemperatur) 6 bis 8 h (GC-Kontrolle) gerührt, dann durch Celite filtriert und das Lösungsmittel im Vakuum entfernt. Die Produkte wurden mittels Chromatographie (Silicagel, 3:1 Pentan-Ether) getrennt. Der Enantiomerenüberschuss wurde auf einer chiralen GC-Säule (TFA-cyclodextrin column) bestimmt. Der ee-Wert betrug typischerweise 99% sowohl für die Alkohole als auch für die Acetate. Typischer Ausbeutebereich: 47 bis 48%.

### Allgemeine Arbeitsvorschrift 4 zur Allylphosphinit-Allylphosphinoxid Umlagerung

12 mM des chiralen Allylalkoholes wurden unter Argonatmosphäre in 50 ml wasserfreiem Toluol gelöst. 1.50 g 4-Dimethylaminopyridin (Acros) wurden zugegeben. Das Gemisch wurde auf -30°C gekühlt und 2.2 ml frisch destilliertes Ph₂PCl (Strem) wurden langsam bei dieser Temperatur zugegeben. Das Gemisch wurde auf Raumtemperatur erwärmen gelassen und dann 6 h auf 80°C erhitzt (Verfolgung mit ³¹P NMR). Das Reaktionsgemisch wurde auf Raumtemperatur abgekühlt, durch eine 2 cm hohe Schicht Silicagel filtriert, und der Filterkuchen mehrmals mit Toluol gewaschen. Das Lösungsmittel des Filtrates wurde im Vakuum entfernt. Der Rückstand wurde aus Heptan/CH₂Cl₂ umkristallisiert. Typischer Ausbeutebereich: 70 bis 77%.

### Allgemeine Arbeitsvorschrift 5 zur Synthese von Diphenylphosphinoylalkoholen aus Allylphosphinoxiden.

4 mM des Allylphosphinoxids wurden unter Argonatmosphäre in einen 20 ml Glasautoklaven (Ace®, Aldrich) gegeben und in 12 ml einer 0.5 M Lösung von 9-BBN in THF (Aldrich) gelöst. Die Lösung wurde 48 h auf 75°C erhitzt und dann auf Raumtemperatur gekühlt.

In einem 250 ml Kolben wurden 6.0 g *m*-Chlorperbenzoesäure (70-75%, Acros) in 40 ml CH₂Cl₂ gelöst. Die Lösung wurde 5 min über MgSO₄ getrocknet und dann filtriert. Der Kolben wurde in ein Aceton/Trockeneis-Bad getaucht und die Lösung des Boran-Adduktes (s. oben) tropfenweise so zugegeben, dass die Innentemperatur 10 bis 15°C betrug. Nach dem Ende der Zugabe wurde das Reaktionsgemisch weitere 30 min gerührt und zweimal mit je 50 ml 20% aq. Na₂S₂O₅, und zweimal mit je 30 ml 2 N NaOH und gesättigter Kochsalzlösung gewaschen. Das Filtrat wurde über Magnesiumsulfat getrocknet und das Lösungsmittel im Vakuum entfernt. Zu dem Rückstand wurden 25 ml Diethylether gegeben und das Gemisch 12h bei Raumtemperatur gerührt. Der weiße Niederschlag wurde abfiltriert, mit Diethylether gewaschen und im Vakuum getrocknet. Typischer Ausbeutebereich: 55 bis 67%.

### Allgemeine Arbeitsvorschrift 6 zur Umwandlung von Diphenylphosphinoxiden in Diphenylphosphin-Boran Komplexe

Unter Argonatmosphäre wurden in ein trockenes Schlenk-Gefäss 5 mM des jeweiligen Phosphinoxids, 20 ml wasserfreies Toluol, 2 ml Polymethylhydrosiloxan (Aldrich) und 1,5 ml Titanisopropoxid (Acros) gegeben. Eine Probe des Reaktionsgemisches wurde in ein NMR-Rohr abgefüllt, um die Reaktion zu verfolgen. Das Reaktionsgemisch und das NMR-Rohr wurden 2 bis 4 h auf 105°C geheizt, bis im ³¹P-NMR vollständige Reduktion beobachtet wurde (Oxidsignale bei 30 bis 40 ppm, Phosphine -20 bis 0 ppm). Das Reaktionsgemisch wurde auf Raumtemperatur gekühlt und 1 ml Boran-Dimethylsulfid Komplex (Aldrich) zugegeben. Nach 5 Minuten wurde das Reaktionsgemisch vorsichtig in einen 250 ml Erlenmeyer Kolben mit 5 ml Methanol gegeben (H₂ Entwicklung!). Nach Abklingen der Gasentwicklung wurde die Lösung in eine 250 ml Nalgene® Flasche mit 20 ml 48% HF und 20 ml H₂O transferiert und dann 12 h bei Raumtemperatur gerührt. Die organische Phase wurde abgetrennt und die wässrige Phase mit 15 ml Toluol extrahiert. Die vereinigten organischen Phasen wurden mit gesättigter NaHCO₃ Lösung und gesättigter Kochsalzlösung gewaschen, über Magnesiumsulfat getrocknet und das Lösungsmittel im Vakuum entfernt. Der Rückstand wurde in 5 ml Diethylether aufgenommen und durch eine 3 cm hohe Silicagel-Schicht filtriert. Der Filterrückstand wurde mit 5 ml Diethylether gewaschen und das Lösungsmittel des Filtrates im Vakuum entfernt. Der Rückstand wurde im Hochvakuum getrocknet und der Phosphin-Boran-Komplex wurde als viskoses Öl, das sich beim Stehen verfestigte, erhalten. Typischer Ausbeutebereich: 94 bis 96%.

### Allgemeine Arbeitsvorschrift 7 zur Umwandlung von Phosphin-Boran-Alkoholen in die entsprechenden Mesylate sowie deren Substitution mit Diphenylphosphin.

Unter Argonatmosphäre wurden in ein 100 ml trockenes Schlenk-Gefäss 5 mM eines Phosphin-Boran Alkohols und 40 ml trockenes Dichlormethan gegeben. Die Mischung wurde auf -30°C gekühlt und 2.4 ml wasserfreies Triethylamin zugegeben.

Dann wurden 1.2 ml Methansulfonylchlorid tropfenweise unter starkem Rühren bei dieser Temperatur zugegeben. Das Reaktionsgemisch wurde 2 h bei -30°C belassen und bei dieser Temperatur unter Rühren in 200 ml wasserfreien Diethylether gegeben. Nach 5 min wurde der weiße Niederschlag durch eine 3cm hohe Silicagel-Schicht abfiltriert. Der Filterkuchen wurde mit 100 ml Diethylether gewaschen und das Lösungsmittel im Vakuum bis auf einen Rückstand von 10 ml entfernt. Das restliche Lösungsmittel wurde im Hochvakuum entfernt, um thermische Belastung zu vermeiden. Der verbleibende Rückstand wurde 5h im Hochvakuum belassen, um Reste von MsCl zu entfernen. Das so erhaltene Mesylat wurde ohne weitere Reinigung in den nächsten Schritt eingesetzt.

In einem 100 ml Schlenk-Gefäss unter Argonatmosphäre wurden 2.00 g t-BuOK in 25 ml wasserfreiem THF und 2.32 g (3 Äquivalente) Diphenylphosphin (Strem) zusammengegeben. Die orangefarbene Lösung wurde auf -20°C gekühlt und das oben beschriebene Mesylat in 10 ml THF langsam zugegeben. Das Reaktionsgemisch wurde auf Raumtemperatur erwärmen gelassen und dann 18 h auf 50°C erhitzt. Nach dem Abkühlen auf Raumtemperatur wurden 2.5 ml Boran-Dimethylsulfid Komplex (Aldrich) zugegeben. Der Inhalt des Reaktionsgefässes wurde vorsichtig in einen 250 ml Erlenmeyerkolben mit 10 ml Methanol gegeben. Nach dem Abklingen der Gasentwicklung wurden 50 ml gesättigte NH₄Cl Lösung zugegeben, die organische Phase abgetrennt und die wässrige Phase zweimal mit je 20 ml Dichlormethan extrahiert. Die vereinigten organischen Phasen wurden mit gesättigter Kochsalzlösung gewaschen, über Magnesiumsulfat getrocknet und das Lösungsmittel im Vakuum entfernt. Der Rückstand wurde in 5 ml Dichlormethan-Pentan (1: 1) gelöst und durch eine 5 cm hohe Aluminiumoxid-Schicht auf einem 25 mm (Durchmesser) Filter filtriert. Der Großteil des Lösungsmittels wurde im Vakuum entfernt und der Rückstand mit 15 ml Diethylether verdünnt und 12 h bei 0°C belassen. Der gebildete Feststoff wurde abfiltriert und im Vakuum getrocknet. Typischer Ausbeutebereich 52 bis 54%.

### Allgemeine Arbeitsvorschrift 8 zur Deprotektion eines Phosphin-Borans mit N,N'-Bis-(3-aminopropyl)-piperazin.

Phosphinboran (1 mM) wurde unter Argonatmosphäre in ein 10 ml Schlenk Gefäss gegeben und in 2ml wasserfreiem Toluol gelöst. Zu dieser Lösung wurde 1 ml N,N'-Bis-(3-aminopropyl)piperazin (Lancaster) gegeben. Das Reaktionsgemisch wurde 2 h auf 105°C erhitzt, auf Raumtemperatur gekühlt und mit 10 ml Diethylether verdünnt. Unter Argonatmosphäre wurde das Gemisch durch mit Diethylether angefeuchtetes Silicagel in einen Kolben filtriert (strengster Sauerstoffausschluss). Das Silicagel wurde zweimal mit je 30 ml Diethylether nachgewaschen. Das Lösungsmittel wurde im Vakuum entfernt. Das resultierende Phosphin wird als weißer Schaum oder hochviskoses Öl erhalten, das sich verfestigt. Das Produkt wurde unter Argonatmosphäre gelagert. Typischer Ausbeutebereich: 99 bis 100 %.

### Beispiel 1

### Synthese von {(1S)-1(R)-[2(R)-diphenylphosphino)-cyclopentyl]-ethyl}(diphenyl)-phosphin.

**1a**) (2E)-2-Ethylidencyclopentanon
   Synthetisiert nach Allgemeiner Arbeitsvorschrift 1 unter Verwendung von Acetaldehyd. Ausbeute 18%, Kp 60-65 °C (10 mbar)
**1b)** (1R,2E)-2-Ethylidencyclopentanol
   Synthetisiert aus **1a** nach Allgemeiner Arbeitsvorschriften 2 und 3. Ausbeuten: 93% und 47% (44% gesamt), Kp. 82-83°C (10 mbar).
**1c)** (S)-(1-Cyclopent-1-en-1-ylethyl)(diphenyl)phosphinoxid
   Synthetisiert aus **1b**) nach Allgemeiner Arbeitsvorschrift 4. Ausbeute 70%.
**1d)** (1S,2S)-2-[(1*S*)-1-(diphenylphosphoryl)ethyl]cyclopentanol
   Synthetisiert aus **1c**) nach Allgemeiner Arbeitsvorschrift 5. Ausbeute 67%.
**1e**) (1S,2S)-2-[(1S)-1-(diphenylphosphino)ethyl]cyclopentanol-boran-Komplex
   Synthetisiert aus **1d**) nach Allgemeiner Arbeitsvorschrift 6. Ausbeute 94%.
**1f**) {(1S)-1(R)-[(2R)-2-(diphenylphosphino)cyclopentyl]ethyl}(diphenyl)-phosphin
   bis-boran Komplex
   Synthetisiert aus **1e**) nach Allgemeiner Arbeitsvorschrift 7. Ausbeute 54%.
**1g**) {(1S)-1(R)-[(2R)-2-(diphenylphosphino)cyclopentyl]ethyl}(diphenyl)phosphin
   Synthetisiert aus **1f**) nach Allgemeiner Arbeitsvorschrift 8. Ausbeute 97 %.

### Beispiel 2

### Synthese von {(1S)-1(S)-[(2R)-2-diphenylphosphino)cyclopentyl]-2-methylpropyl}-(diphenyl)phosphin

**2a**) (2E)-2-Isobutylidencyclopentanon
   Synthetisiert nach Allgemeiner Arbeitsvorschrift 1 unter Verwendung von Isobutyraldehyd. Ausbeute 45%, Kp.88-90°C (10 mbar)
**2b**) (1R,2E)-2-Isobutylidencyclopentanol
   Synthetisiert aus **2a)** nach Allgemeinen Arbeitsvorschriften 2 und 3. Ausbeuten 95% und 48% (46% gesamt), Kp. 95-98°C (10 mbar).
**2c**) (S)-(1-Cyclopent-1-en-1-yl)-2-methylpropyl)(diphenyl)phosphinoxid
   Synthetisiert aus **2b**) nach Allgemeiner Arbeitsvorschrift 4. Ausbeute 77%.
**2d**) (1S,2S)-2-[(1S)-1-(Diphenylphosphoryl)-2-methylpropyl]cyclopentanol
   Synthetisiert aus **2c**) nach Allgemeiner Arbeitsvorschrift 5. Ausbeute 65%.
**2e**) (1S,2S)-2-[(1S)-1-(Diphenylphosphino)-2-methylpropyl]cyclopentanol-boran Komplex
   Synthetisiert aus **2d**) nach Allgemeiner Arbeitsvorschrift 6. Ausbeute 96%.
**2f**) {(1S)-1(S)-[(2R)-2-(Diphenylphosphino)cyclopentyl]-2-methylpropyl}(diphenyl)-phosphin bis-boran Komplex
   Synthetisiert aus **2e**) nach Allgemeiner Arbeitsvorschrift 7. Ausbeute 52%.
**2g**) {(1S)-1(S)-[(2R)-2-(Diphenylphosphino)-cyclopentyl]- 2-methylpropyl}-(diphenyl)-phosphin
   Synthetisiert aus **2f**) nach Allgemeiner Arbeitsvorschrift 8. Ausbeute 98 %.

### Beispiel 3

### Synthese von {(S)-cyclohexyl-[(1S,2R)-2-(diphenylphosphino)-cyclopentyl]-methyl}(diphenyl)phosphin

**3a**) (2E)-2-Cyclohexylmethylencyclopentanon
   Synthetisiert nach Allgemeiner Arbeitsvorschrift 1 unter Verwendung von Cyclohexancarbaldehyd. Ausbeute 36%, Kp. 91-95°C (0.5 mbar).
**3b**) (1R,2E)-2-Cyclohexylmethylencyclopentanol
   Synthetisiert aus **3a)** nach Allgemeinen Arbeitsvorschriften 2 und 3. Ausbeuten 96% und 48% (46% gesamt), Kp. 100-103°C (10 mbar).
**3c)** [(S)-Cyclohexyl(cyclopent-1-en-1-yl)methyl](diphenyl)phosphinoxid
   Synthetisiert aus **3b**) nach Allgemeiner Arbeitsvorschrift 4. Ausbeute 76%.
**3d**) (1S,2S)-2-[(S)-Cyclohexyl(diphenylphosphoryl)methyl]cyclopentanol
   Synthetisiert aus **3c)** nach Allgemeiner Arbeitsvorschrift 5. Ausbeute 55%.
**3e**) (1S,2S)-2-[(S)-Cyclohexyl(diphenylphosphino)methyl]cyclopentanol-boran Komplex
   Synthetisiert aus **3d**) nach Allgemeiner Arbeitsvorschrift 6. Ausbeute 96%.
**3f**) {(S)-Cyclohexyl[(1S,2R)-2-(diphenylphosphino)-cyclopentyl]-methyl}(diphenyl)-phosphin bis-boran Komplex
   Synthetisiert aus **3e)** nach Allgemeiner Arbeitsvorschrift 7. Ausbeute 52%.
**3g)** {(S)-Cyclohexyl[(1S,2R)-2-(diphenylphosphino)-cyclopentyl]-methyl}(diphenyl)-phosphin
   Synthetisiert aus **3f**) nach Allgemeiner Arbeitsvorschrift 8. Ausbeute 94 %.

Für nachstehende Beispiele werden die Liganden der Formel (I) verwendet und wie folgt abgekürzt:

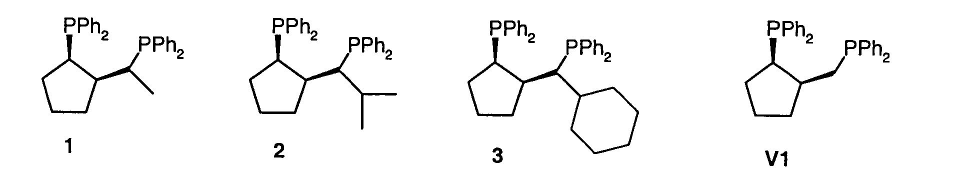

### Beispiele 4 bis 13:

### Rhodium-katalysierte asymmetrische 1,4-Addition von Phenylboronsäure an 2-Cyclohexenon

Allgemeine Arbeitsvorschrift zur Rh-katalysierten asymmetrischen 1,4-Addition von Phenylboronsäuren an 2-Cyclohexenon

Unter Argonatmosphäre wurden Rh(acac)(cod) (3.7 mg, 12 µmol), das chirale Diphosphin (12 µmol), PhB(OH)₂ (244 mg, 2 mmol), wasserfreies Dioxan (2 mL) und 2-Cyclohexenon (0.04 mL, 0.4 mmol) in ein Schlenk-Gefäss gegeben. Die Mischung wurde 15 min bei Raumtemperatur gerührt und H₂O (0.1 mL) wurde zugegeben. Das Reaktionsgemisch wurde 3 h bei 100°C gerührt. Wasser (5 mL) wurde zugegeben und das Gemisch zweimal mit je 5 ml Diethylether extrahiert. Die vereinigten organischen Phasen wurden mit 5 ml gesättigter Kochsalzlösung gewaschen, über Magnesiumsulfat getrocknet und das Lösungsmittel im Vakuum entfernt. Reinigung durch Flash-Chromatograpie (25 % Et₂O in Pentan) ergab (R)-3-phenylcyclohexanon (68.2 mg, 98 %) mit 88 % *ee* als ein farbloses Öl.
**HPLC** (Chiralcel OD-H, *n*-Heptan/*i*-PrOH 99/2, 0.3 mL/min, 215 nm): tᵣ/min = 44.0 (*S*), 47.0 (*R*).
^{**1**}**H NMR** (300 MHz, CDCl₃): δ 7.30-7.20 (m, 5H), 3.01 (m, 1H), 2.60-2.30 (m, 4H), 2.10-2.00 (m, 2H), 1.89-1.70 (m, 2H) ppm.
^{**13**}**C NMR** (75 MHz, CDCl₃): δ 211.0, 144.3, 128.6, 126.6, 126.5, 48.9, 44.7, 41.1, 32.7, 25.5 ppm.

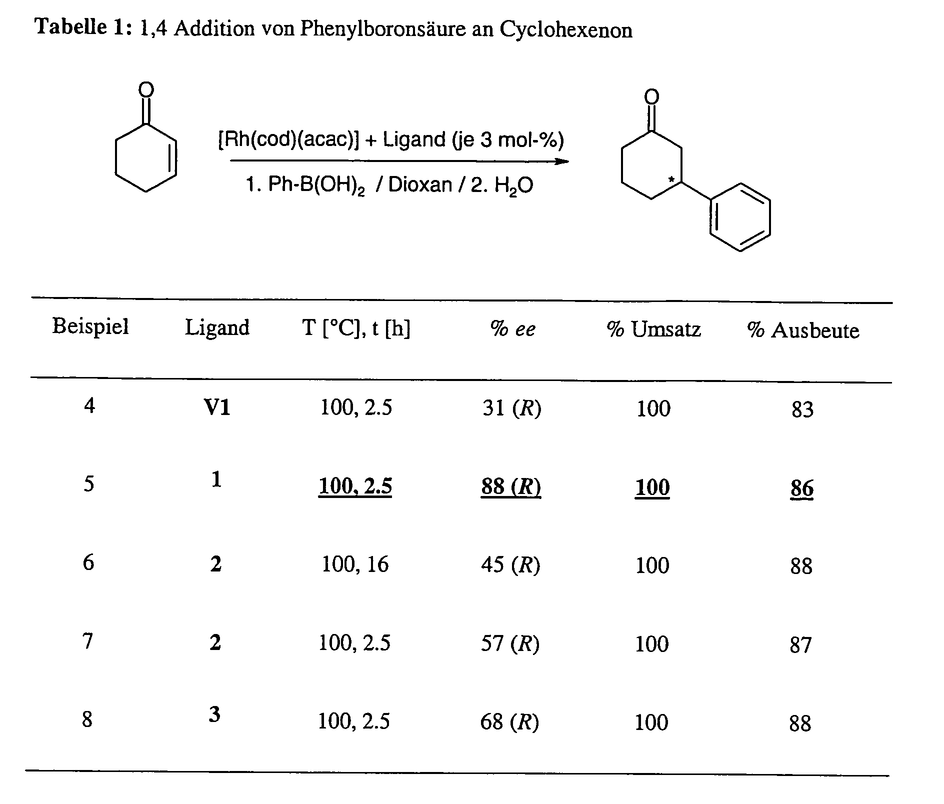

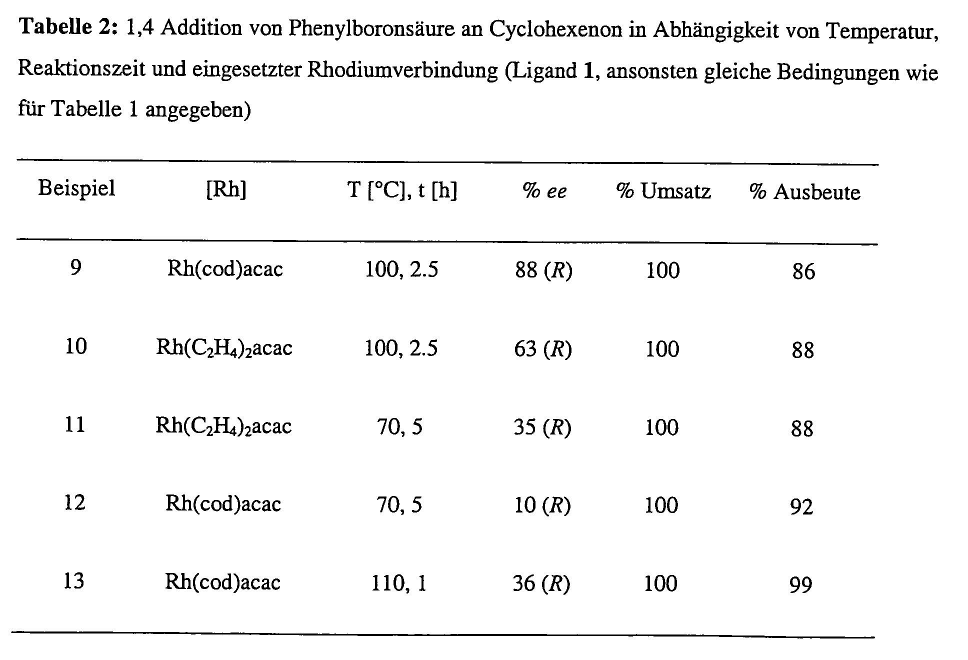

### Beispiele 14 bis 16:

### Rhodium-katalysierte asymmetrische Hydroborierung von Styrol

### Allgemeine Arbeitsvorschrift zur Rh-katalysierten Hydroborierung von Styrol mit Catecholboran

Eine Mischung aus [Rh(cod₂)]BF₄ (8.1 mg, 0.020 mmol, 1 mol %) und dem chiralen Diphosphin (0.020 mmol, 1 mol % in Et₂O) in trockenem THF (2 mL) wurde 10 min bei Raumtemperatur in einem 10 ml Schlenk Gefäss unter Argonatmosphäre gerührt. Styrol (2 mmol, 0.23 mL) wurde der orangefarbenen Lösung zugesetzt. Das homogene Reaktionsgemisch wurde auf -20°C gekühlt und bei dieser Temperatur 15 min gerührt, bevor frisch destilliertes Catecholboran (2.4 mmol, 0.26 mL) zugegeben wurde. Das Reaktionsgemisch wurde 16 h bei -10°C gerührt und dann durch Zugabe von EtOH (2 mL) gequencht. Wässrige NaOH (2 M, 2 mL) und 30 % H₂O₂ wurden nacheinander zugegeben und das Reaktionsgemisch wurde während 2 h unter starkem Rühren auf Raumtemperatur erwärmt. Das Gemisch wurde dann zweimal mit je 5 ml Et₂O extrahiert. Die vereinigten organischen Phasen wurden mit jeweils 2 ml NaOH (1M) und gesättigter Kochsalzlösung gewaschen und über Magnesiumsulfat getrocknet. Der Rückstand wurde mittels FlashChromatographie (20 % Et₂O in Pentan) gereinigt. Auf diese Weise wurde (R)-Phenylethanol (72 %, 176 mg) mit 80 % *ee* als farblose Flüssigkeit erhalten.
**HPLC** (Chiralcel OD-H, *n*-Heptan/*i*-PrOH 98/2, 0.4 mL/min, 215 nm): tᵣ/min = 35.5 (*R*), 43.7 (*S*).
¹**H NMR** (300 MHz, CDCl₃): δ 7.20-7.09 (m, 5H), 4.66 (q, *J* = 6.5 Hz, 1H), 2.80 (br s, 1H), 1.30 (d, *J* = 6.5 Hz, 3H) ppm.
¹³**C NMR** (75 MHz, CDCl₃): δ 146.4, 128.8, 127.7, 125.9, 70.6, 25.6 ppm.

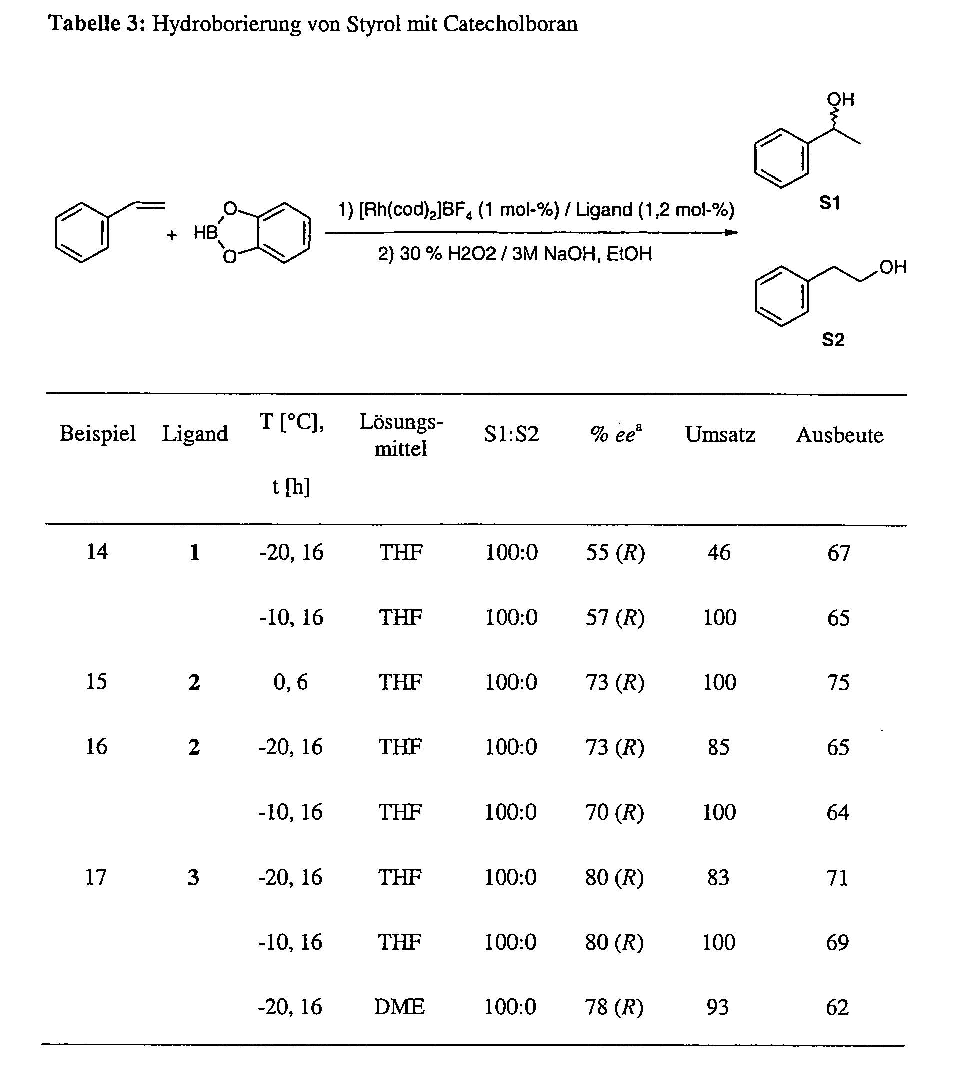

### Beispiele 17 bis 21:

Rhodium-katalysierte asymmetrische Hydrierung von (Z)-α-Acetamidozimtsäure methylester

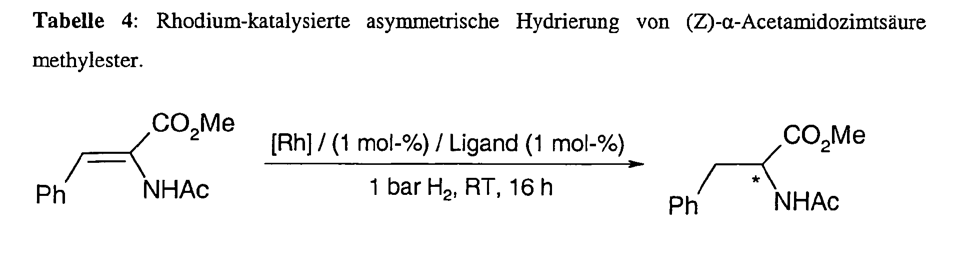

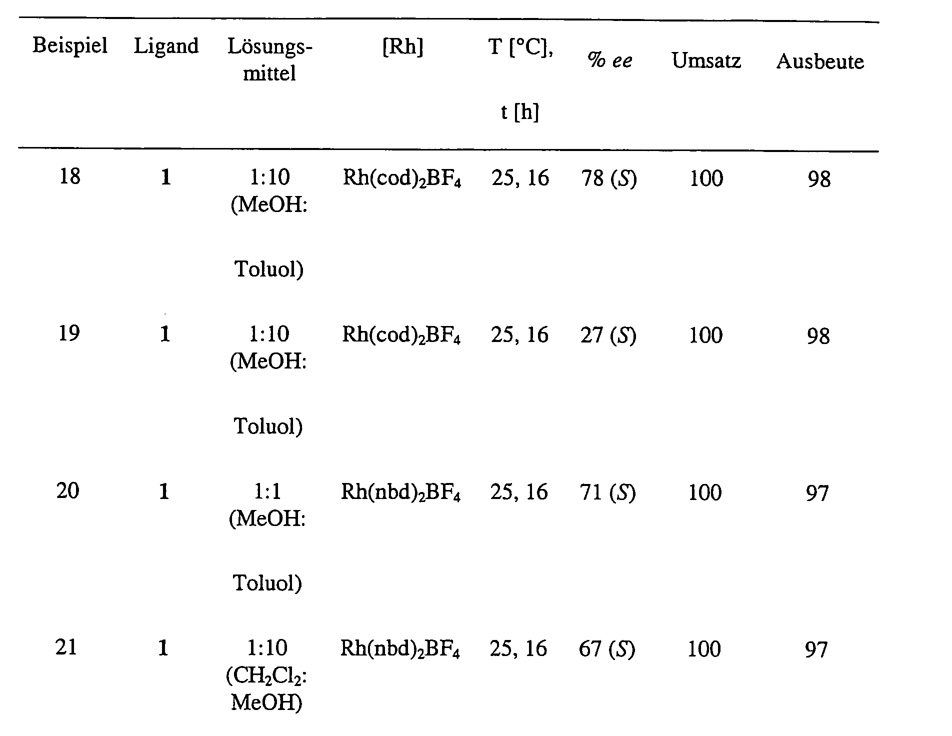

### Beispiel 22:

### Rhodium-katalysierte asymmetrische Hydrierung von Acetophenon-Phenylcarbonylhydrazon

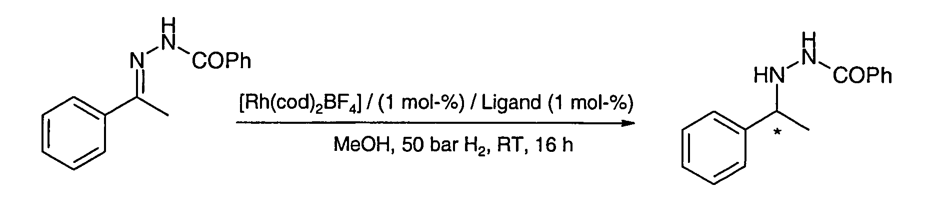

| Beispiel | Ligand | % *ee* | Umsatz | Ausbeute |
|---|---|---|---|---|
| 22 | 2 | 19 (*R*) | 100 | 92 |

### Beispiel 23:

### Ruthenium-katalysierte asymmetrische Hydrierung von 3-Phenyl-3-oxopropansäureethylester

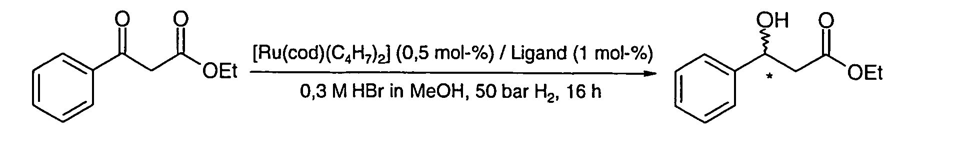

| Beispiel | Ligand | % *ee* | Umsatz | Ausbeute |
|---|---|---|---|---|
| 23 | 2 | 7 (*R*) | 100 | 98 |

### Beispiel 24:

### Palladium-katalysierte asymmetrische allylische Substitution von 1,3-Diphenylallylacetat mit Malonsäuremethylester

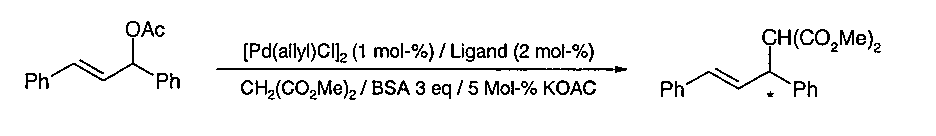

| Beispiel | Ligand | % *ee* | Umsatz | Ausbeute |
|---|---|---|---|---|
| 24 | 2 | 28 (*S*) | 100 | 75 |

## Patentansprüche

1. Verbindungen der Formel (I), 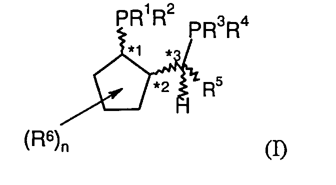 in der
• *1, *2 und *3 jeweils unabhängig voneinander ein stereogenes Kohlenstoffatom markieren, das in R- oder S- Konfiguration vorliegt,
• R¹, R², R³ und R⁴ jeweils unabhängig voneinander stehen können für: Alkyl, Arylalkyl oder Aryl oder einen heterocyclischen Rest mit insgesamt 4 bis 16 Kohlenstoffatomen oder R¹ und R² und/oder R³ und R⁴ jeweils zusammen für Alkylen stehen,
• R⁵ stehen kann für: Alkyl, Arylalkyl oder Aryl und
• R⁶ stehen kann für: Alkyl, Alkoxy, Arylalkyl oder Aryl und
• n stehen kann für: 0, 1 oder 2,
sowie deren Komplexe mit Boranen.

2. Verbindungen gemäß Anspruch 1, **dadurch gekennzeichnet, dass** *1, *2 so gewählt sind, dass die entsprechenden Phosphansubstituenten bezogen auf die Ebene des zentralen fünfgliedrigen Ringes eine cis-Position einnehmen und die Verbindungen der Formel (I) stereoisomerenangereichert sind.

3. Verbindungen gemäß Anspruch 1 oder 2, **dadurch gekennzeichnet, dass** R¹ und R² bzw. R³ und R⁴ jeweils paarweise identisch stehen für: Alkyl oder Aryl oder einen heterocyclischen Rest mit insgesamt 4 bis 9 Kohlenstoffatomen oder jeweils zusammen für Alkylen.

4. Nachfolgende Verbindungen gemäß Anspruch 1,2 oder 3:
(1*R*, *2R*)-1-Diphenylphosphino-2-(1S-diphenylphosphino-ethyl)-cyclopentan, (*1R*, *2R*)-1-Diphenylphosphino-2-(1S-diphenylphosphino-2-methylpropyl)-cyclo-pentan und (*1R*, *2R*)-1-Diphenylphosphino-2-(S-diphenylphosphino-cyclohexyl-methyl)-cyclopentan.

5. Verfahren zur Herstellung von Verbindungen der Formel (I) **dadurch gekennzeichnet, dass**
• in einem Schritt A) Verbindungen der Formel (II) 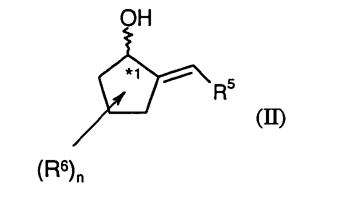 in der * 1 und R⁵ die in Anspruch 1 genannten Bedeutungen und Vorzugsbereiche besitzen und in der R⁵ weiterhin für Wasserstoff stehen kann
mit Verbindungen der Formel (III)
Hal-PR³R⁴ (III)
zu Verbindungen der Formel (IV) umgesetzt werden 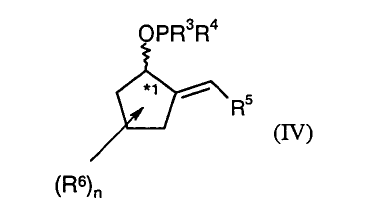 und
• in einem Schritt B) die Verbindungen der Formel (IV) gegebenenfalls in einem organischen Lösungsmittel durch Erhitzen auf mindestens 60°C in Verbindungen der Formel (V) überführt werden 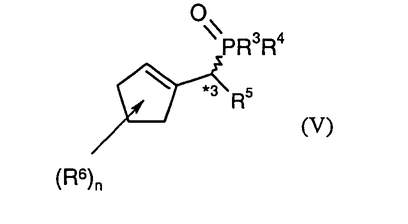
• und in einem Schritt C) die Verbindungen der Formel (V) durch Umsetzung mit einem Boran und anschließende Oxidation in Verbindungen der Formel (VI) überführt werden 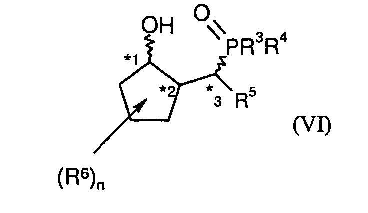
• und in einem Schritt D) die Verbindungen der Formel (VI) durch Reduktion in Verbindungen der Formel (VII) überführt werden 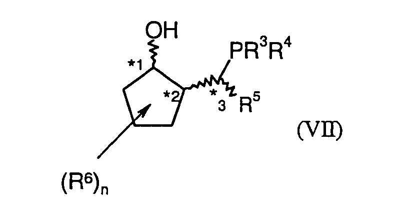
• und in einem Schritt E) die Verbindungen der Formel (VII) durch Umsetzung mit Verbindungen der Formel (VIII)
Hal-O₂SR⁷ (VIII)
in Verbindungen der Formel (IX) überführt werden, 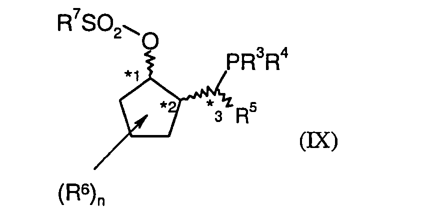
• und in einem Schritt F) die Verbindungen der Formel (IX) durch Umsetzung mit Verbindungen der Formel (X)
HPR¹R² (X)
in die Verbindungen der Formel (I) überführt werden,
wobei in den Formeln (II), (IV), (V), (VI), (VII), (IX) und (X) *1, *2 und *3, R¹, R², R³, R⁴, R⁵ und R⁶ die gleichen Bedeutungen besitzen, wie sie unter der Formel (I) in Anspruch 1 genannt wurden und
R⁷ in den Formeln (VIII) und (IX) für Alkyl, Fluoralkyl, Arylalkyl oder Aryl steht und
Hal in den Formeln (III) und (VIII) jeweils für Chlor, Brom oder Iod steht.

6. Verfahren zur Herstellung von Verbindungen der Formel (IV) gemäß Anspruch 5, **dadurch gekennzeichnet, dass** es Schritt A) gemäß Anspruch 5 umfasst.

7. Verfahren zur Herstellung von Verbindungen der Formel (V) gemäß Anspruch 5, **dadurch gekennzeichnet, dass** es Schritt A) und B) gemäß Anspruch 5 umfasst.

8. Verfahren zur Herstellung von Verbindungen der Formel (VI) gemäß Anspruch 5, **dadurch gekennzeichnet, dass** es Schritt A), B) und C) gemäß Anspruch 5 umfasst.

9. Verfahren zur Herstellung von Verbindungen der Formel (VII) gemäß Anspruch 5, **dadurch gekennzeichnet, dass** es Schritt A), B), C) und D) gemäß Anspruch 5 umfasst.

10. Verfahren zur Herstellung von Verbindungen der Formel (IX) gemäß Anspruch 5, **dadurch gekennzeichnet, dass** es Schritt A), B), C), D) und E) gemäß Anspruch 5 umfasst.

11. Verbindungen der Formel (II) gemäß Anspruch 5.

12. Nachstehende Verbindungen der Formel (II) gemäß Anspruch 5.
(*1S*)-2-Ethylidencyclopentanol, (*1S*)-2-(2-methylpropyliden)cyclopentanol und (*1S*)*-*2-Cyclohexylmethylidencyclopentanol.

13. Verbindungen der Formel (IV) gemäß Anspruch 5

14. Nachstehende Verbindungen der Formel (IV) gemäß Anspruch 5:
(*1R*)-Diphenylphosphinoxy-2-Ethylidencyclopentan, (*1R*)-Diphenylphosphinoxy-2-(2-methylpropyliden)cyclopentan und (*1R*)-Diphenylphosphinoxy-2-cyclohexylmethylidencyclopentan.

15. Verbindungen der Formel (V) gemäß Anspruch 5

16. Nachstehende Verbindungen der Formel (V) gemäß Anspruch 5:
(1*S*)-Diphenylphosphinoylethylcyclopenten, ((1*S*)-Diphenylphosphinoyl-2-methylpropyl)-cyclopenten und ((1*S*)-Diphenylphosphinoyl-1-methyl-cyclohexyl)cyclopenten.

17. Verbindungen der Formel (VI) gemäß Anspruch 5

18. Nachstehende Verbindungen der Formel (VI) gemäß Anspruch 5:
*(1S, 2R*)-1-Hydroxy-2-(1S-diphenylphosphinoyl-ethyl)-cyclopentan, (*1S, 2R*)-1-Hydroxy-2-(1S-diphenylphosphinoyl-2-methylpropyl)-cyclopentan und (*1S*, *2R*)-1-Hydroxy-2-(S-diphenylphosphinoyl-cyclohexylmethyl)-cyclopentan.

19. Verbindungen der Formel (VII) gemäß Anspruch 5 sowie deren Komplexe mit Boranen.

20. Nachstehende Verbindungen der Formel (VII) gemäß Anspruch 5:
(*1S*, *2R*)-1-Hydroxy-2-(1S-diphenylphosphino-ethyl)-cyclopentan, (*1S*, *2R*)-1-Hydroxy-2-(1S-diphenylphosphino-2-methylpropyl)-cyclopentan und (*1S*, *2R*)-1-Hydroxy-2-(S-diphenylphosphino-cyclohexylmethyl)-cyclopentan sowie deren Komplexe mit Boranen.

21. Verbindungen der Formel (IX) gemäß Anspruch 5.

22. Nachstehende Verbindungen der Formel (IX) gemäß Anspruch 5:
(*1S*, *2R*)-1-Methansulfonyloxy-2-(1S-diphenylphosphino-ethyl)-cyclopentan, (*1S*, *2R*)-1-Methansulfonyloxy-2-(1S-diphenylphosphino-2-methylpropyl)-cyclopentan und (*1S, 2R*)-1-Methansulfonyloxy-2-(S-diphenylphosphino-cyclohexylmethyl)-cyclopentan.

23. Übergangsmetallkomplexe enthaltend Verbindungen gemäß Anspruch 1,2,3 oder 4.

24. Katalysatoren enthaltend Übergangsmetallkomplexe gemäß Anspruch 23.

25. Verwendung von Katalysatoren gemäß Anspruch 24 zur Herstellung von stereoisomerenangereicherten Verbindungen.

26. Verfahren zur Herstellung von stereoisomerenangereicherten Verbindungen, **dadurch gekennzeichnet, dass** die Herstellung in Gegenwart von Katalysatoren gemäß Anspruch 24 erfolgt.

27. Verfahren nach Anspruch 26, **dadurch gekennzeichnet, dass** die Katalysatoren für asymmetrische 1,4-Additionen, asymmetrische Hydroformylierungen, asymmetrische allylische Substitutionen, asymmetrische Hydrocyanierungen, asymmetrische Heck-Reaktionen, asymmetrische Hydroborierungen und asymmetrische Hydrogenierungen eingesetzt werden.
